# EUROPÄISCHE PATENTSCHRIFT

(11) **EP 3 127 642 B1**
(45) Veröffentlichungstag und Bekanntmachung des Hinweises auf die Patenterteilung: **05.05.2021**
(21) Anmeldenummer: 16001692.9
(22) Anmeldetag: 01.08.2016
(51) Int. Cl.: B23D 63/00, B23D 63/14, B23D 65/00

(54) **VERFAHREN ZUM ERMITTELN EINER IDEALEN SCHLEIFSCHEIBENPOSITION RELATIV ZU EINEM ZU BEARBEITENDEN SÄGEBLATT**
METHOD FOR DETERMINING AN IDEAL GRINDING DISC POSITION RELATIVE TO A SAW BLADE TO BE MACHINED
PROCÉDÉ DE DETERMINATION DE LA POSITION IDÉALE DE DISQUE DE MEULAGE PAR RAPPORT À UNE LAME DE SCIE EN FONCTIONNEMENT

(30) Priorität: 07.08.2015 DE 102015010299
(43) Veröffentlichungstag der Anmeldung: 08.02.2017
(73) Patentinhaber: VOLLMER WERKE Maschinenfabrik GmbH, 88400 Biberach/Riss (DE)
(72) Erfinder: Schlanser, Bernhard, 88447 Warthausen (DE)
(74) Vertreter: Thum, Bernhard

(56) Entgegenhaltungen:
- WO-A1-02/092270
- WO-A1-2007/017724
- DE-A1- 10 121 370
- FR-A3- 2 774 614

## Beschreibung

Die vorliegende Erfindung betrifft ein Verfahren zum Ermitteln einer idealen Schleifscheibenposition relativ zu einem zu bearbeitenden Sägeblatt, insbesondere einem Kreissägeblatt oder einem Bandsägeblatt, bei einer Schleifbearbeitung.

FR 2 774 614 offenbart ein Verfahren, gemäß dem Oberbegriff des Anspruchs 1. Im Zuge dieses Verfahrens wird der Zahn in der Bearbeitungsstellung abgetastet. Dabei wird die Schleifscheibe mit der Spanfläche in Kontakt gebracht Durch den Kontakt wird das Drehmoment der Schleifscheibe schlagartig erhöht. Die Erhöhung wird durch die Regelung des Servomotors detektiert, woraufhin der Servomotor sofort abgeschaltet wird. Dieser Abtastvorgang wird zumindest einmal in unterschiedlicher Y-Position der Schleifscheibe wiederholt, so dass daraus und aus der bekannten Schwenkstellung des Kreissägeblatts um die Schwenkachse der Spanwinkel des Sägeblatts ermittelt wird.

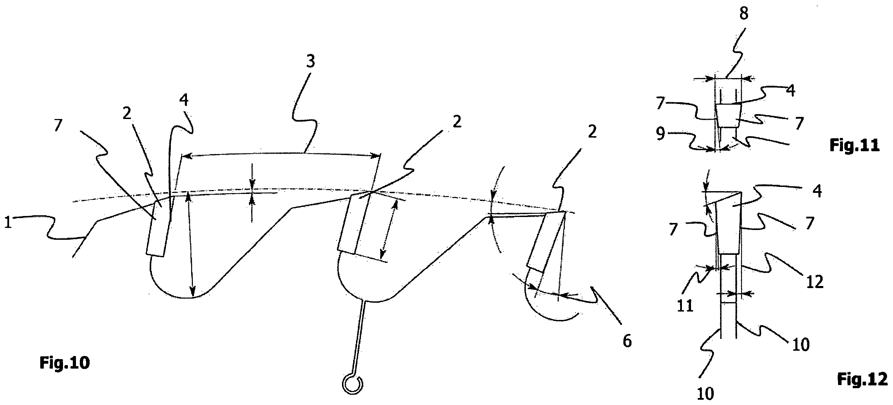

Die Sägezähne eines Sägeblattes weisen häufig komplexe geometrische Formen auf, um zu gewährleisten, dass saubere Schnitte erzielt und die erzeugten Sägespänne aus dem Schnittbereich abgeführt werden. Figur 10 zeigt beispielhaft zur Erläuterung ein Sägeblatt 1 mit daran vorgesehen Sägezähnen 2. Der Abstand zwischen den einzelnen Sägezähnen 2 an dem Sägeblatt 1 wird als Zahnteilung 3 bezeichnet. Die Sägezähne 2 weisen eine Spanfläche 4 auf, die sich über eine vorbestimmte Länge 5 erstreckt. Der Winkel zwischen der Spanfläche 4 und einer Linie durch die Zahnspitze und das Zentrum des Sägeblattes 1 wird als Spanwinkel 6 bezeichnet.

Figur 11 zeigt eine Draufsicht eines Sägezahns 2. Der Sägezahn 2 weist Zahnflanken 7 auf und definiert die Schnittbreite 8 mit der Spanfläche 4. Die Zahnflanken 7 weisen einen Tangentialfreiwinkel 9 auf, der zwischen einer senkrecht zur Spanfläche 4 verlaufenden Linie und der Zahnflanke 7 definiert wird.

Figur 12 zeigt eine Vorderansicht des Sägezahns 2. In Figur 12 sind die Spanfläche 4 und die Zahnflanke 7 erkennbar. Zwischen der Zahnflanke 7 und einer parallel zur Außenfläche 10 des Stammblatts des Sägeblatts 1 verlaufenden Linie wird der Radialfreiwinkel 11 definiert. Mit 12 ist der Überstand des Sägezahns 2 über die Außenfläche 10 des Stammblattes des Sägeblatts 1 bezeichnet.

Aus der voranstehenden Beschreibung der Gestalt eines Sägezahns 2 wird ersichtlich, dass das Schleifen der Sägezähne 2 zum Erreichen eines vorbestimmten Tangentialfreiwinkels 9 und eines vorbestimmten Radialfreiwinkels 11 am Zahn ein äußerst komplexer Vorgang ist. Um die Sägezähne 2 mit einem Tangentialfreiwinkel 9 und einem Radialfreiwinkel 11 versehen zu können, muss eine Schleifscheibe in eine vorbestimmte Schrägstellung überführt werden.

Bisher wird die benötigte Schrägstellung der Schleifscheibe zum Erreichen des gewünschten Tangentialfreiwinkels und des gewünschten Radialfreiwinkels am Sägezahn manuell eingestellt bzw. ermittelt. Die Einstellung der benötigten Schleifscheibenposition zum Erreichen des gewünschten Tangentialfreiwinkels und des gewünschten Radialfreiwinkels am Sägezahn wird dadurch weiter erschwert, dass nur der zu schleifende Zahn geschliffen werden darf, jedoch nicht der sich vor oder nach dem zu schleifenden Sägezahn befindliche Zahn. Wenn der vorherige oder der Sägezahn nach dem geschliffenen Sägezahn unbeabsichtigt mitgeschliffen werden, wird das Sägeblatt unbrauchbar, da diese Zähne dann zumeist nicht mehr mit den gewünschten Freiwinkeln versehen werden können. Ferner muss bei der Einstellung der Schleifscheibenposition zusätzlich berücksichtigt werden, dass die Schleifscheibe eines zu schleifenden Sägezahns nicht an anderer Stelle in das sogenannte Stammblatt des Sägeblatts eindringen darf, was ebenfalls zu Beschädigungen des Sägeblatts führt. Im Allgemeinen sind Sägeblätter mit kleinen Zahnteilungen, das heißt mit geringen Abständen zwischen den einzelnen Zähnen des Sägeblattes und geringen Zahnüberständen, wenn überhaupt, nur mit großem Aufwand und einer Vielzahl von Versuchen zum Auffinden der optimalen Schleifscheibenposition zu bearbeiten.

Häufig können daher die zum Einrichten der Schleifmaschinen bzw. zum Einstellen der benötigten Position der Schleifscheibe genutzten Sägeblätter nicht mehr verwendet werden.

Es ist eine Aufgabe der vorliegenden Erfindung ein Verfahren zum Ermitteln einer idealen Schleifscheibenposition relativ zu dem Sägeblatt bereitzustellen, bei dem die ideale Schleifscheibenposition mit geringem Aufwand schnell und einfach aufgefunden werden kann, ohne dass Sägeblätter beschädigt werden.

Diese Aufgabe wird mit einem Verfahren gemäß dem Patentanspruch 1 gelöst.

In den abhängigen Ansprüchen sind bevorzugte Abwandlungen des erfindungsgemäßen Verfahrens angegeben.

Das erfindungsgemäße Verfahren zum Ermitteln einer idealen Schleifscheibenposition relativ zu einem zu bearbeitenden Sägeblatt, insbesondere einem Kreissägeblatt oder einem Bandsägeblatt, umfasst den folgenden Schritt:
Ermitteln der Position des Schleifscheibenmittelpunkts relativ zu dem Sägeblatt anhand wenigstens einer geometrischen Beziehung zwischen der Schleifscheibe und wenigstens einem zu schleifenden Zahn des Sägeblattes, wobei die geometrische Beziehung zwischen der Schleifscheibe und dem wenigstens einem zu schleifenden Zahn des Sägeblattes an einer Position der Schleifscheibe definiert wird, die die Position der Schleifscheibe am Ende eines Schleifwegs an dem zum schleifenden Zahn entspricht.

Erfindungsgemäß wird die geometrische Beziehung zwischen dem zu schleifenden Sägezahn und der Schleifscheibe am Schleifwegende an dem zu schleifenden Zahn festgelegt. In dieser Position ist erfindungsgemäß sicherzustellen, dass nur der zu schleifende Zahn berührt bzw. geschliffen wird. Ferner kann dadurch ebenfalls sichergestellt werden, dass der Schleifscheibenbelag den zu schleifenden Zahn komplett bearbeitet hat und sich nicht mehr am zu schleifenden Bereich des Sägezahns befindet. Die Position am Schleifwegende an dem Zahn wird ferner so gewählt, dass die Schleifscheibe nicht in das Stammblatt des Sägeblatts eindringt.

Mit dem erfindungsgemäßen Verfahren kann die ideale Schleifscheibenposition relativ zu dem zu bearbeitenden Sägeblatt automatisiert aufgefunden werden. Es werden keine manuellen Versuche unter einem großen Erfahrungs-, Zeit- und Personalaufwand benötigt, um die ideale Schleifscheibenposition für die gewünschten Freiwinkel an dem Sägezahn auffinden zu können. Anders ausgedrückt kann mit dem erfindungsgemäßen Verfahren die ideale Schleifscheibenposition vollautomatisch ohne manuelle Einstellungsversuche oder Ähnliches ermittelt werden.

Das erfindungsgemäße Verfahren erlaubt es somit, in schneller und einfacher Weise die ideale Schleifscheibenposition zu ermitteln, ohne dass unnötiger Ausschuss, d. h. beim Einrichten beschädigte Schleifscheiben, anfällt.

Mit dem erfindungsgemäßen Verfahren und der damit ermittelten idealen Schleifscheibenposition lassen sich nach der Ermittlung des Mittelpunkts der Schleifscheibe alle Einstellungen und Positionen der Maschine automatisch vornehmen bzw. automatisieren. Diese Einstellungen und Positionen können beispielsweise Antastpositionen, Fahrwege und Messpositionen umfassen. Auch das Verfahren zur Ermittlung der idealen Schleifscheibenposition kann automatisiert ausgeführt werden, beispielsweise von einer Steuereinheit einer Werkzeugmaschine.

Die geometrische Beziehung zwischen dem wenigstens einem zu schleifenden Zahn des Sägeblatts und der Schleifscheibe kann insbesondere zur Ermittlung von wenigstens einem Punkt dienen, aus dessen Position dann der Mittelpunkt der Schleifscheibe bestimmt werden kann. Dazu können beispielsweise verschiedene Parameter der Zahngeometrie und der Geometrie der Schleifscheibe verwendet werden, die eine Ermittlung des Mittelpunkts der Schleifscheibe relativ zu dem zu schleifenden Zahn des Sägeblatts zulassen, wenn die vorbestimmte geometrische Beziehung zwischen dem Sägeblatt bzw. dem Sägezahn und der Schleifscheiben hergestellt wurde.

Das Verfahren kann ferner die Ermittlung eines vorbestimmbaren Punkts an dem Sägeblatt umfassen. Unter "vorbestimmbarer Punkt" ist in diesem Zusammenhang zu verstehen, dass dieser Punkt beispielsweise anhand der Geometrie oder der Dimensionen des Sägeblatts bestimmt oder anderweitig in seiner Lage ermittelt werden kann. Der vorbestimmbare Punkt kann beispielsweise an der Zahnspitze eines Sägezahns liegen. Dieser Punkt kann beispielsweise anhand der Geometrie des Sägeblatts relativ zu einer Einspanneinrichtung an einer Werkzeugmaschine ermittelt werden. Das Verfahren kann das Festlegen eines Koordinatensystems an dem vorbestimmbaren Punkt des Sägeblatts umfassen. Dabei kann der vorbestimmbare Punkt den Ursprung des Koordinatensystems bilden. Das Koordinatensystem kann beispielsweise ein 2-dimensionales Koordinatensystem sein.

Das Verfahren kann weiter die Ermittlung eines ersten Punktes an dem zu schleifenden Zahn des Sägeblattes in dem Koordinatensystem umfassen. Der erste Punkt kann an einer Endkante des zu schleifenden Zahns liegen, die der Zahnspitze entgegengesetzt an dem zu schleifenden Zahn angeordnet ist. Ferner kann ein zweiter Punkt an dem zuvor geschliffenen Zahn in dem Koordinatensystem ermittelt werden. Der zuvor geschliffene Zahn ist der Zahn, der in der Reihenfolge der zu bearbeitenden Zähne vor dem zu schleifenden Zahn geschliffen wurde. Der zweite Punkt kann beispielsweise an der Zahnspitze des zuvor geschliffenen Zahns festgelegt werden.

Die Schleifscheibe kann eine Stirnschleifscheibe sein, die wenigstens eine erste und eine zweite Umfangskante aufweist. Die erste und die zweite Umfangskante können zwischen sich eine Stirnfläche der Stirnschleifscheibe festlegen.

Die geometrische Beziehung kann durch Anlegen der ersten Umfangskante an den ersten Punkt und durch Anlegen der zweiten Umfangskante an den zweiten Punkt festgelegt werden. Die erste und die zweite Umfangskante der Schleifscheibe können das geometrische Model der Schleifscheibe bilden.

Beispielsweise kann der Mittelpunkt der Schleifscheibe auf Grundlage der geometrischen Beziehung zwischen dem Sägeblatt und der Schleifscheibe mit der pq-Formel ermittelt werden. Die Position des Mittelpunkts der Schleifscheibe kann auch auf andere Weise ermittelt werden, solange die vorbestimmte geometrische Beziehung zwischen dem Sägeblatt und der Schleifscheibe hergestellt wurde.

Der erste Punkt an dem zu schleifenden Zahn des Sägeblatts kann anhand des Spanwinkels, der Schneidenlänge und/oder der Schneidendicke ermittelt werden. Der zweite Punkt an dem zuvor geschliffenen Zahn kann aus der Zahnteilung berechnet werden. Wie bereits erwähnt wurde, ist unter dem Begriff "Zahnteilung" der Abstand zwischen aufeinander folgenden Sägezähnen des Sägeblatts zu verstehen. Das Verfahren kann weiter das Ermitteln der einzunehmenden Position wenigstens einer Achse einer Werkzeugmaschine auf Grundlage des ermittelten Schleifscheibenmittelpunkts umfassen. Mit anderen Worten müssen die Koordinaten des ermittelten Schleifscheibenmittelpunkts in Achspositionen wenigstens einer Achse einer Werkzeugmaschine umgerechnet werden. Dadurch kann die wenigstens eine Achse der Werkzeugmaschine derart verfahren werden, dass sich die Schleifscheibe mit ihrem Mittelpunkt in der Werkzeugmaschine an der Position der ermittelten Koordinaten des ermittelten Schleifscheibenmittelpunkts befindet. Bei der Ermittlung der einzunehmenden Position der wenigstens einen Achse der Werkzeugmaschine kann auch der Verschleißzustand der Schleifmaschine berücksichtigt werden, d.h. die einzunehmende Position der wenigstens einen Achse verändert sich nicht nur aufgrund des ermittelten Schleifscheibenmittelpunkts, sondern kann auch auf Grundlage des fortschreitenden Verschleißzustandes der Schleifscheibe verändert bzw. nachgestellt werden.

Die Schleifscheibe kann einen voreingestellten Radialwinkel aufweisen. Durch den voreingestellten Radialwinkel der Schleifscheibe kann gewährleistet werden, dass tatsächlich nur der zu schleifende Zahn geschliffen wird. Mit dem voreingestellten Radialwinkel der Schleifscheibe können auch Sägeblätter mit komplexen Geometrien wie z.B. mit sehr kleinen Zahnteilungen geschliffen werden, ohne dass die benachbarten Sägezähne mitgeschliffen oder das Stammblatt des Sägeblatts beschädigt wird. Anders ausgedrückt kann mit dem voreingestellten Radialwinkel der Schleifscheibe das von einer Werkzeugmaschine bearbeitbare Spektrum von Sägeblättern im Hinblick auf beispielsweise die Größe der Sägeblätter und die Zahnteilung deutlich vergrößert werden.

Ferner kann die Positionsänderung der wenigstens einen Achse der Werkzeugmaschine zur Radialwinkeleinstellung der Schleifscheibe berechnet werden. Hier kann die Position der wenigstens einen Achse der Werkzeugmaschine ermittelt werden, die benötigt wird, um die Position und Lage der Schleifscheibe derart zu verändern, dass an dem Sägezahn der gewünschte Radialfreiwinkel erzeugt werden kann. Es kann auch möglich sein, die Positionsänderungen von zwei oder mehr Achsen der Werkzeugmaschine zu ermitteln. Die notwendigen Positionsänderungen der Achse(n) zur Radialwinkeleinstellung können auch aus einer vorbestimmten Tabelle ermittelt werden, in der sich verschiedene Werte für die Positionen einer oder mehrerer Achsen bezüglich eines einzustellenden Radialwinkels finden. Der Radialwinkel der Schleifscheibe wird zumeist größer voreingestellt als der am Sägezahn zu erzeugende Radialfreiwinkel. Durch den zu groß voreingestellten Radialwinkel der Schleifscheibe kann gewährleistet werden, dass nur der zu schleifenden Sägezahn und kein anderer Sägezahn mitgeschliffen wird.

Das Verfahren kann die Berechnung des einzustellenden Tangentialfreiwinkels umfassen. Der einzustellende Tangentialfreiwinkel wird aus dem gewünschten Tangentialfreiwinkel am Zahn und einem Korrekturwert berechnet. Der Korrekturwert kann aufgrund der vorher ermittelten Radialwinkeleinstellung nötig werden. Wie bereits erwähnt, wird zumeist der Radialwinkel der Schleifscheibe größer eingestellt, um sicher zu stellen, dass nur der zu schleifende Zahn und keine weiteren Zähne des Sägeblatts an- oder mitgeschliffen werden. Der Korrekturwert wird bei der Berechnung des einzustellenden Tangentialfreiwinkels zur Kompensation des zu groß eingestellten Radialwinkels benötigt.

Das Verfahren kann das Ermitteln der Position der wenigstens einen Achse auf Grundlage der Berechnung des einzustellenden Tangentialfreiwinkels umfasst.

Das Verfahren kann ferner die Berechnung der Position der wenigstens einen Achse der Werkzeugmaschine am Anfang des Schleifwegs an dem zu schleifenden Zahn umfassen. Die Position des Mittelpunkts der Schleifscheibe wird am Schleifwegende ermittelt. Dadurch wird gewährleistet, dass kein benachbarter Sägezahn mitgeschliffen wird, und die Schleifscheibe nicht in das Stammblatt des Sägeblatts eindringt. Um den zu schleifenden Zahn von seiner Zahnspitze aus, d.h. dem Beginn des Schleifwegs, schleifen zu können, muss auch die Position der wenigstens einen Achse der Werkzeugmaschine am Beginn des Schleifwegs ermittelt werden. Dies kann beispielsweise auf Grundlage des Ursprungs des Koordinatensystems erfolgen, der in der Zahnspitze des zu schleifenden Zahns liegt. Die Position des Ursprungs des Koordinatensystems bzw. der Zahnspitze des zu schleifenden Zahns kann beispielsweise aufgrund der geometrischen Daten des Sägeblatts oder durch Antasten vorbestimmbar sein. Basierend auf der vorbestimmbaren Position der Zahnspitze kann die Position der wenigstens einen Achse der Werkzeugmaschine ermittelt werden.

Die Erfindung betrifft ferner eine Werkzeugmaschine mit wenigstens einer numerisch gesteuerten Achse und wenigstens einer Steuereinheit zum Ausführen des Verfahrens nach einem der Ansprüche 1 bis 15.

Mit den voreingestellten oder ermittelten Radialwinkel und Tangentialwinkel der Schleifscheibe wird die Schleifscheibe mittels interpolierender Achsbewegungen mehrerer Achsen einer Werkzeugmaschine entlang der Zahnflanke des Sägezahns bewegt, um die Zahnflanke des Sägezahns mit dem gewünschten Radialfreiwinkel und dem gewünschten Tangentialfreiwinkel zu versehen.

Im Folgenden wird ein Ausführungsbeispiel der Erfindung mit Bezug auf die beigefügten Figuren beschrieben. Es stellen dar:
- Figuren 1 bis 3: Ansichten eines Sägeblattes und einer Schleifscheibe;
- Figuren 4 und 5: Ansichten einer Schleifscheibe und eines Sägeblattes bei der Ermittlung des Mittelpunkts der Schleifscheibe;
- Figur 6: eine perspektivische Ansicht einer Werkzeugmaschine;
- Figur 7: eine vergrößerte Ansicht eines Abschnitts der Werkzeugmaschine gemäß Figur 6;
- Figuren 8 und 9: Ansichten der Positionsänderungen der Achsen einer Werkzeugmaschine zur Radialwinkel- und Tangentialwinkeleinstellung; und
- Figuren 10 bis 12: Ansichten eines Sägeblattes.

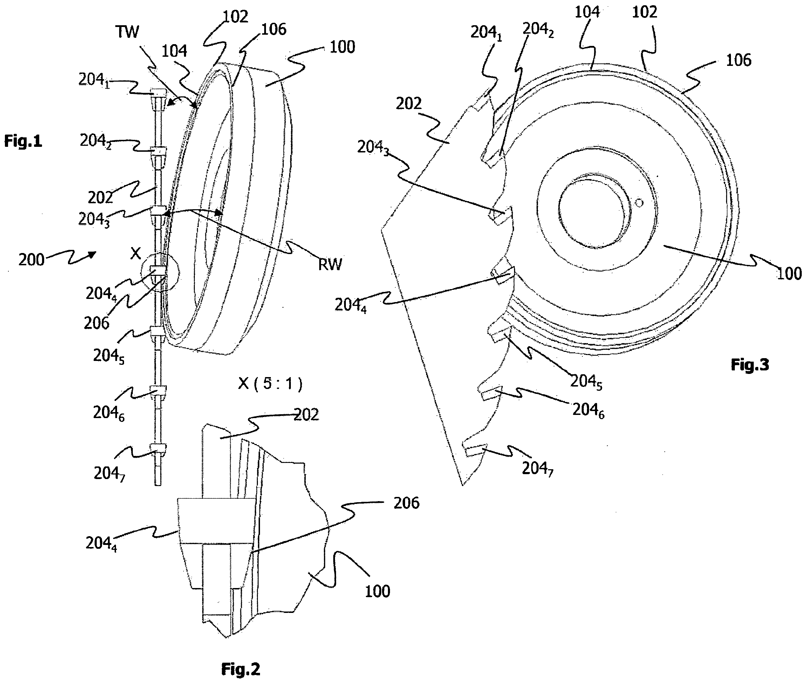

Figur 1 zeigt eine perspektivische Ansicht der Schleifscheibe 100 und des Sägeblatts 200.

Die Schleifscheibe 100 gemäß dieser Ausführungsform ist eine Stirnschleifscheibe. Die Schleifscheibe 100 weist einen Schleifscheibenbelag 102 auf. Der Schleifscheibenbelag 102 ist an einer Stirnfläche der Schleifscheibe 100 vorgesehen. Der Schleifscheibenbelag 102 wird von einer inneren Umfangskante 104 und einer äußeren Umfangskante 106 begrenzt. Die Umfangskanten 104 und 106 sind im Wesentlichen kreisförmig ausgebildet.

Das Sägeblatt 200 weist ein Stammblatt 202 und Sägezähne 204 auf. In der in Figur 1 gezeigten Stellung des Sägeblatts 200 und der Schleifscheibe 100 soll die Zahnflanke 206 des Zahns 204₄ geschliffen werden.

In der in Figur 1 gezeigten Stellung der Schleifscheibe 100 weist die Schleifscheibe 100 einen Radialwinkel RW und einen Tangentialwinkel TW auf, so dass die Zahnflanke 206 des Zahns 204₄ mit dem gewünschten Tangentialfreiwinkel und dem gewünschten Radialfreiwinkel versehen werden kann. Mit dem in Figur 1 gezeigten Radialwinkel RW und Tangentialwinkel TW der Schleifscheibe 100 kann sichergestellt werden, dass ausschließlich der Zahn 204₄ geschliffen wird und eben nicht einer der benachbarten Zähne 204₃ oder 204₅. Um dies sicherstellen zu können, kann der Radialwinkel RW der Schleifscheibe 100 größer eingestellt werden als der am Zahn 204₄ zu erzeugende Radialwinkel. Der zu groß eingestellte Radialwinkel RW der Schleifschiebe 100 wird durch einen um einen Korrekturwert ergänzten Tangentialwinkel TW der Schleifscheibe kompensiert. Das heißt, der Tangentialwinkel TW der Schleifscheibe 100 ergibt sich aus dem am Sägezahn 204₄ zu erzeugenden Tangentialwinkel zuzüglich des Korrekturwerts. Der Tangentialwinkel TW der Schleifscheibe 100 wird somit ebenfalls größer als der tatsächlich am Sägezahn 204₄ zu erzeugende Tangentialwinkel eingestellt.

Figur 2 zeigt eine vergrößerte Ansicht des Details X.

Der Zahn 204₄ weist die zu schleifende Zahnflanke 206 auf. Die Schleifscheibe 100 befindet sich in der in Figur 1 gezeigten Stellung am Schleifwegende, d.h. die Zahnflanke 206 wurde bereits von dem Schleifscheibenbelag 102 geschliffen.

Figur 3 zeigt eine weitere perspektivische Ansicht des Sägeblatts 200 und der Schleifscheibe 100.

In Figur 3 sind die Umfangskanten 104 und 106 gezeigt, die den Schleifscheibenbelag 102 an der Stirnfläche der Schleifscheibe 100 begrenzen.

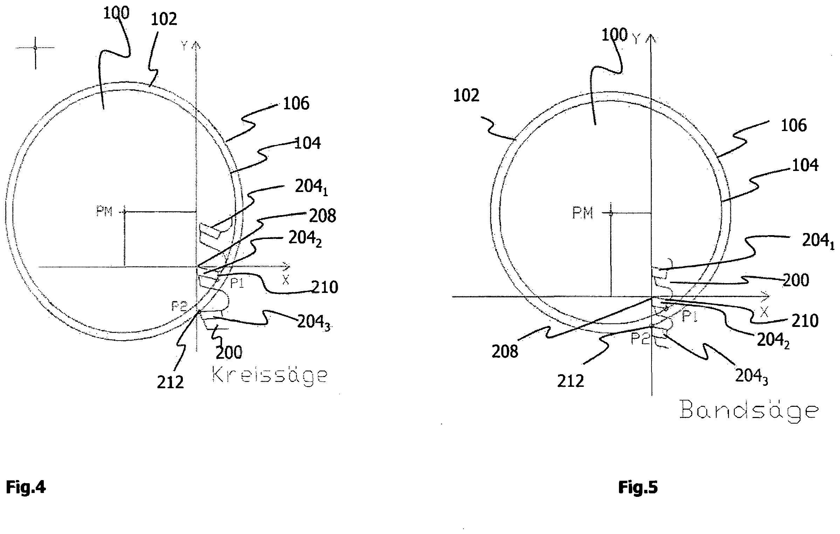

Figur 4 zeigt eine Ansicht, in der die Schleifscheibe 100 und das Sägeblatt 200 schematisch dargestellt sind. Die Ansicht gemäß Figur 4 entspricht der Darstellung der Schleifscheibe 100 und des Sägeblattes 200 auf einer Anzeige einer Steuereinheit einer Werkzeugmaschine (nicht gezeigt).

Bei dem Sägeblatt 200 gemäß Figur 4 handelt es sich um ein Kreissägeblatt. Die Schleifscheibe 100 ist als geometrisches Modell dargestellt.

In Figur 4 ist eine geometrische Beziehung zwischen der Schleifscheibe 100 und dem Sägeblatt 200 dargestellt.

An die Zahnspitze 208 des Zahns 204₂ wird der Ursprung eines zweidimensionalen Koordinatensystems gelegt. Bei dem Zahn 204₂ handelt es sich um den zu schleifenden Zahn. Die Schleifscheibe 100 ist in Figur 4 am Schleifwegende dargestellt, d. h. an dem Punkt, an dem sich die Schleifscheibe gerade bei Abschluss des Schleifvorgangs des Zahns 204₂ befindet. Somit kann sichergestellt werden, dass nach Schleifen des Zahns 204₂ bzw. beim Schleifen des Zahns 204₂ keiner der benachbarten Zähne 204₁ und 204₃ mitgeschliffen wird. An der Endkante 210 des Zahns 204₂, die der Zahnspitze 208 entgegengesetzt ist, wird der Punkt P1 festgelegt. Die Position bzw. die Koordinaten des Punkts P1 können in dem zweidimensionalen Koordinatensystem anhand des Spanwinkels, der Schneidenlänge und/oder der Schneidendicke des Zahns 204₂ ermittelt werden. In der Zahnspitze 212 des zuvor geschliffenen Zahns 204₃ wird der Punkt P2 festgelegt. Die Position bzw. die Koordinaten des Punktes P2 in dem zweidimensionalen Koordinatensystem an dem Zahn 204₃ können aufgrund der Zahnteilung ermittelt werden.

Wie bereits erwähnt wurde, handelt es sich bei den beiden in Figur 4 dargestellten Kreisen um die Umfangskanten 104 und 106 des Schleifscheibenbelags 102. Die Kreise der Umfangskanten 104 und 106 stellen ein geometrisches Modell der Schleifscheibe dar. Die Umfangskanten 104 und 106 der Schleifscheibe 100 werden derart positioniert, dass die radial innere Umfangskante 104 an dem Punkt P1 anliegt und die radial äußere Umfangskante 106 an dem Punkt P2. Auf diese Weise wird eine geometrische Beziehung zwischen der Schleifscheibe 100 und dem Sägeblatt 200 hergestellt. Da die Punkte P1 und P2 in dem Koordinatensystem bereits ermittelt und damit die geometrischen Eigenschaften, wie z.B. der Radius und Durchmesser der Schleifscheibe 100, bekannt sind, kann aus der geometrischen Beziehung der Punkte P1 und P2, die auf den Umfangskanten 104 und 106 der Schleifscheibe 100 liegen, der Mittelpunkt PM bzw. die Position des Mittelpunkts PM der Schleifscheibe 100 ermittelt werden.

Im Allgemeinen läuft das Verfahren zur Ermittlung des Mittelpunkts PM der Schleifscheibe 100 folgendermaßen ab:
Die Position der Zahnspitze 208 des Zahns 204₂ ist vorbestimmbar und damit bekannt. Der Ursprung des zweidimensionalen Koordinatensystems wird in die Zahnspitze 208 des Zahns 204₂ gelegt. Auf Grundlage des Koordinatensystems mit seinem Ursprung in der Zahnspitze 208 wird der Punkt P1 an der Endkante 210 des Zahns 204₂ mit Hilfe des Spanwinkels, der Schneidenlänge und der Schneidendicke des Zahns 204₂ ermittelt. Der Punkt P₂ wird in die Zahnspitze 212 des Zahns 204₃ gelegt. Der Zahn 204₃ ist der zuvor geschliffene Zahn. Die Position bzw. die Koordinaten des Punkts P₂ im Koordinatensystem werden mit Hilfe der Zahnteilung ermittelt. Wenn die Punkte P1 und P2 ermittelt sind, werden die Umfangskanten 104 und 106 des geometrischen Models der Schleifscheibe 100 verlagert, bis der Punkt P1 an der radial inneren Umfangskante 104 und der Punkt P2 an der radial äußeren Umfangskante 106 anliegen. Da die Punkte P1 und P2 im Koordinatensystem mit ihren Koordinaten bekannt sind, kann auf Grundlage der nun herrschenden geometrischen Beziehung zwischen den Umfangskanten 104 und 106 der Schleifscheibe 100 und den Punkten P1 und P2 an dem Sägeblatt 200 die Position des Mittelpunkts PM der

Schleifscheibe 100 beispielsweise über die pq-Formel ermittelt werden. Die Berechnung des Mittelpunkts anhand der geometrischen Beziehung zwischen dem Sägeblatt und der Schleifscheibe kann jedoch auch auf andere Weise erfolgen.

Figur 5 zeigt eine schematische Ansicht der Schleifscheibe 100 und des Sägeblatts 200.

Der einzige Unterschied zwischen der Darstellung gemäß Figur 4 und der Darstellung gemäß Figur 5 ist der, dass es sich bei dem Sägeblatt gemäß Figur 5 um ein Bandsägeblatt und nicht um ein Kreissägeblatt wie in Figur 4 handelt. Das Verfahren kann für ein Bandsägeblatt verwendet werden und läuft ebenfalls in der voranstehend ausführlich beschriebenen Art ab.

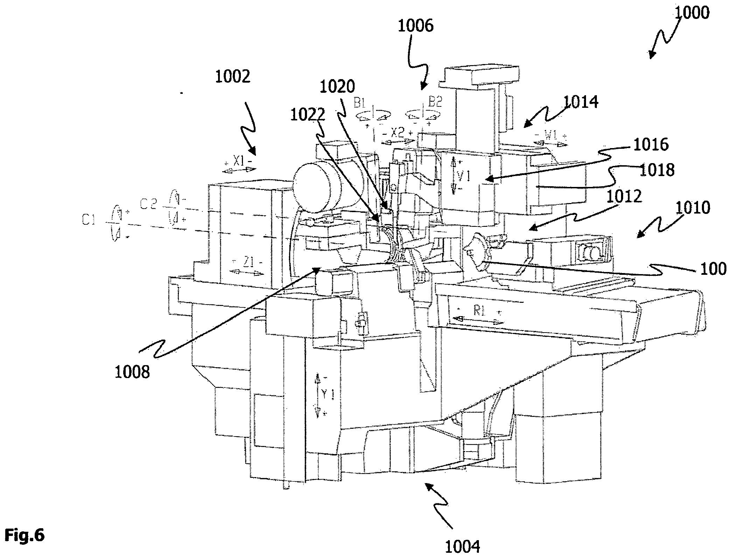

Figur 6 zeigt eine perspektivische Ansicht einer Werkzeugmaschine 1000, für die das erfindungsgemäße Verfahren genutzt werden kann.

Die Werkzeugmaschine 1000 weist einen ersten Schlitten 1002, einen zweiten Schlitten 1004, einen dritten Schlitten 1006 und einen vierten Schlitten 1008 auf. Die Schlitten 1002, 1004, 1006 und 1008 sind in Richtung der Achsen X1, X2, Y1 und Z1 verlagerbar. Die Schlitten 1006 und 1008 können über die Schlitten 1002 und 1004 in Richtung der Achsen Y1 und Z1 verlagert werden. Die Werkzeugmaschine 1000 weist einen fünften Schlitten 1010 auf, der in Richtung der Achse R1 verlagerbar ist. Der fünften Schlitten 1010 weist eine Einspanneinrichtung 1012 auf. Die Werkzeugmaschine 1000 umfasst ferner eine Kreuzschlittenanordnung 1014, die zwei Schlitten 1016 und 1018 umfasst. Der Schlitten 1016 ist in Richtung der Achse V1 verlagerbar. Der Schlitten 1018 ist in Richtung der Achse W1 verlagerbar. Die Werkzeugmaschine 1000 umfasst ferner zwei Einspanneinrichtungen 1020 und 1022, die um die Achsen B1, B2, C1 und C2 verschwenkbar sind. In die Einspanneinrichtungen 1020 und 1022 können Schleifscheiben (nicht gezeigt) eingespannt werden. In die Einspanneinrichtung 1010 kann ein Sägeblatt 200 eingespannt werden.

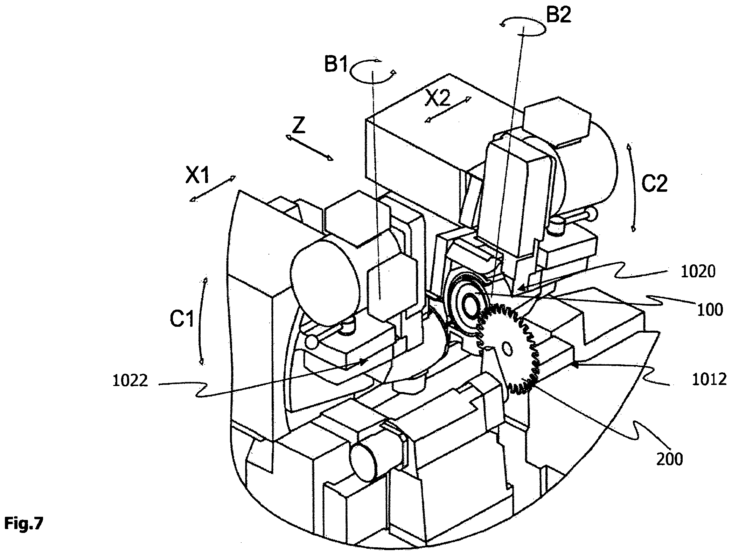

Figur 7 zeigt eine vergrößerte Ansicht eines Abschnitts der Werkzeugmaschine 1000.

In der Einspanneinrichtung 1018 ist eine Schleifscheibe 100 aufgenommen, mit der die Zahnflanken der Zähne des Sägeblattes 200 geschliffen werden können. Das Sägeblatt 200 ist in der Einspanneinrichtung 1012 aufgenommen.

Die Einspanneinrichtung 1020 kann in Richtung der Achse X2 verlagert werden. Ferner kann die Einspanneinrichtung um die Achsen B2 und C2 (Figur 6) verschwenkt werden. In gleicher Weise kann die Einspanneinrichtung 1022 in Richtung der Achse X1 verlagert und um die Achsen B1 und C2 (Figur 6) verschwenkt werden. Ferner ist eine Relativbewegung zwischen den Einspanneinrichtungen 1020 und 1022 und der Einspanneinrichtung 1010 mit dem Sägeblatt 200 in Richtung der Achse Z möglich.

Die Achsen B1 und B2 dienen zur Voreinstellung des Radialwinkels bzw. Sturzes der Schleifscheibe (Fig.1). Über die Achse R1 kann die Position des Sägeblatts bzw. des Werkstücks verändert werden. Die Achsen X1 und X2 dienen zum Verfahren der Schleifscheibe senkrecht zum Sägeblatt, d.h. die Achsen X1 und X2 werden während des Schleifens des Zahns verfahren, um die Zahnflanke des Zahns schleifen zu können. Über die Achse Y1 wird die Arbeitshöhe und über die Achse Z1 der Arbeitshub eingestellt (siehe Figur 6). Die Achse V1 dient zum Zahnvorschub in vertikaler Richtung und die Achse W1 zum Zahnvorschub in horizontaler Richtung (siehe Figur 6). Die Achsen C1 und C2 dienen zur Einstellung des Tangentialwinkels der Schleifscheibe.

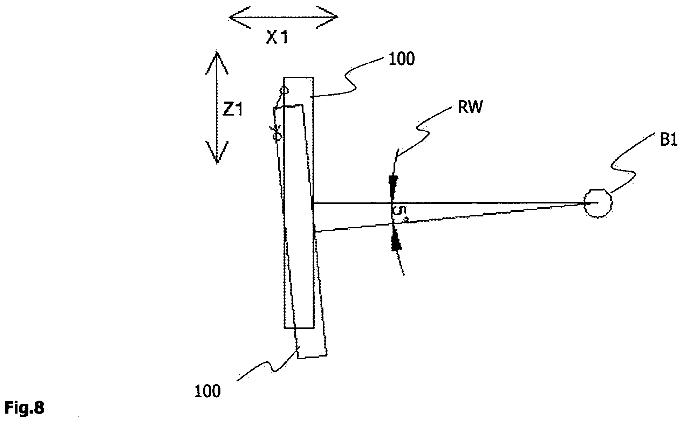

Figur 8 zeigt schematisch die Positionsveränderung der Schleifscheibe zur Einstellung des Radialwinkels RW, der benötigt wird, um den gewünschten Radialfreiwinkel an dem Sägeblatt erzeugen zu können. Der gewünschte Radialwinkel an den Zähnen des Sägeblatts entsteht durch die Interpolation der Achsen X1, X2, Y1 und Z1.

Zunächst befindet sich die Schleifscheibe 100 bzw. der Mittelpunkt der Schleifscheibe 100 an der Position, die mit dem voranstehend beschriebenen Verfahren ermittelt wurde.

Ausgehend von dieser Position wird der Radialwinkel RW der Schleifscheibe 100 nun verändert, damit der gewünschte Radialfreiwinkel an der Zahnflanke des Zahns erzeugt werden kann. Dazu wird die Position der Schleifscheibe 100 um beispielsweise 5 Grad um die B1-Achse (siehe Figuren 6 und 7) verlagert. Gleichzeitig muss die Schleifscheibe 100 von der Achse Z1 in Figur 8 nach unten verlagert werden.

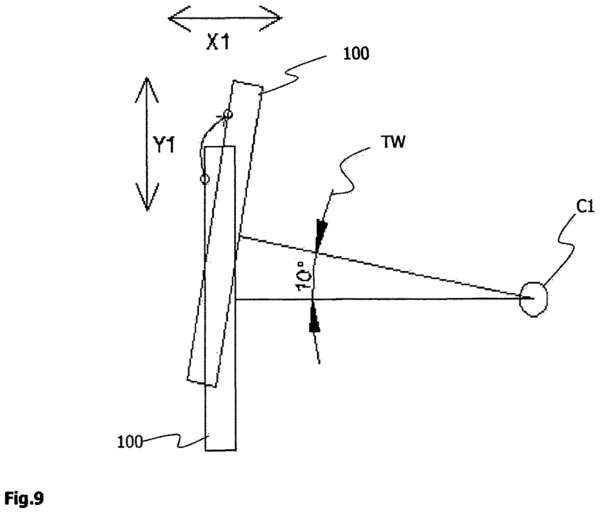

Figur 9 zeigt eine schematische Ansicht der Schleifscheibe 100 bei der Einstellung des Tangentialfreiwinkels.

Die Schleifscheibe 100 befindet sich zunächst in der aufgrund der Radialwinkeleinstellung geänderten Position. Um den gewünschten Tangentialfreiwinkel an dem zu schleifenden Zahn herstellen zu können, wird bei der Einstellung des gewünschten Tangentialwinkels TW der Schleifscheibe 100 die Schleifscheibe 100 um beispielsweise 10 Grad um die C1-Achse (Figur 1) verlagert. Dazu wird die Schleifscheibe 100 von den Achsen Y1 und X1 verfahren, um die gewünschte Veränderung des Tangentialwinkels TW der Schleifscheibe 100 zu erziehen.

Nach der Berechnung der Positionsänderungen der Achsen Y1, X1, X2 zur Tangentialfreiwinkeleinstellung erfolgt die Berechnung der Achspositionen am Anfang des Schleifwegs an der Zahnflanke des Zahns.

Die berechneten Achspositionen werden im Anschluss auf ihre Plausibilität geprüft.

Um Kollisionen der Schleifscheibe 100 mit dem Stammblatt 202 des Sägeblatts 200 zu verhindern, wird die Schleifscheibenposition am Schleifwegende berechnet. Im Fall einer Kollision kann die Werkzeugmaschine (Figur 6) bzw. die Steuereinheit der Werkzeugmaschine eine Fehlermeldung an einen Bediener ausgeben. Der Bediener kann dann entscheiden, ob er das Schleifen der Schleifscheibe 100 in das Stammblatt 202 in Kauf nimmt oder Änderungen an der Position der Schleifscheibe vornimmt. Durch die Änderung an der Radialwinkelvoreinstellung oder durch Eingabe einer gewünschten Schleifscheibenhöhe, kann der Bediener unter Umständen notwendige Änderungen an der berechneten Schleifscheibenposition vornehmen.

Aufgrund des erfindungsgemäßen Verfahrens und der damit ermittelten idealen Schleifscheibenposition lassen sich nach der Ermittlung des Mittelpunkts PM der Schleifscheibe alle Einstellungen und Positionen der Maschine automatisch vornehmen bzw. automatisieren. Diese Einstellungen und Positionen können beispielsweise Antastpositionen, Fahrwege und Messpositionen umfassen.

## Patentansprüche

1. Verfahren zum Ermitteln einer idealen Schleifscheibenposition relativ zu einem Sägeblatt (200), insbesondere einem Kreissägeblatt oder einem Bandsägeblatt, wobei das Verfahren umfasst:
Ermitteln der Position des Schleifscheibenmittelpunkts (PM) relativ zu dem Sägeblatt (200) anhand wenigstens einer geometrischen Beziehung zwischen der Schleifscheibe (100) und wenigstens einem zu schleifenden Zahn (204) des Sägeblatts (200), wobei die geometrische Beziehung zwischen der Schleifscheibe (100) und dem wenigstens einen zu schleifenden Zahn (204) des Sägeblatts (200) an einer Position der Schleifscheibe (100) definiert wird, die der Position der Schleifscheibe (100) am Ende eines Schleifwegs an dem zu schleifenden Zahn (204) entspricht, wobei sich der Schleifweg zwischen einer Endkante (210) und einer Zahnspitze (208) des zu schleifenden Zahns (204) erstreckt,
**dadurch gekennzeichnet dass**, das Verfahren den weiteren Schritt umfasst:
Ermitteln eines geometrischen Models der Schleifscheibe (100), das wenigstens eine Umfangskante (104, 106) der Schleifscheibe (100) definiert, wobei die geometrische Beziehung durch Anlegen der wenigstens einen Umfangskante (104, 106) der Schleifscheibe (100) am ersten Punkt (P1) und am zweiten Punkt (P2) festgelegt wird, so dass der Schleifscheibenmittelpunkt (PM) in dem Koordinatensystem ermittelbar ist, wobei der zweite Punkt (P2) in einer Zahnspitze (208, 212) festgelegt wird, und wobei der erste Punkt (P1) an der Endkante (210) des zu schleifenden Zahns (204) festgelegt wird, die der Zahnspitze (208, 212) entgegengesetzt ist.

2. Verfahren nach Anspruch 1,
wobei das Verfahren den weiteren Schritt umfasst: Ermitteln eines vorbestimmbaren Punkts (208) an dem Sägeblatt (200).

3. Verfahren nach Anspruch 2,
wobei das Verfahren den weiteren Schritt umfasst:
Festlegen eines Koordinatensystems an dem vorbestimmbaren Punkt (208) des Sägeblatts (200), wobei der vorbestimmbare Punkt (208) den Ursprung des Koordinatensystems bildet.

4. Verfahren nach Anspruch 3,
wobei das Verfahren die weiteren Schritte umfasst:
Ermitteln eines ersten Punktes (P1) an dem zu schleifenden Zahn (204) des Sägeblattes (200) in dem Koordinatensystem, und
Ermitteln eines zweiten Punktes (P2) an dem zuvor geschliffenen Zahn (204) in dem Koordinatensystem.

5. Verfahren nach einem der Ansprüche 1 bis 4,
wobei die Schleifscheibe (100) eine Stirnschleifscheibe ist, die wenigstens eine erste und eine zweite Umfangskante (104, 106) aufweist.

6. Verfahren nach Anspruch 5,
wobei die geometrische Beziehung durch Anlegen der ersten Umfangskante (104) an dem ersten Punkt (P1) und durch Anlegen der zweiten Umfangskante (104) an dem zweiten Punkt (P2) festgelegt wird.

7. Verfahren nach einem der Ansprüche 4 bis 6,
wobei der erste Punkt (P1) an dem zu schleifenden Zahn (204) des Sägeblattes (200) anhand des Spanwinkels, der Schneidenlänge und/oder der Schneidendicke ermittelt werden kann.

8. Verfahren nach einem der Ansprüche 4 bis 7,
wobei der zweite Punkt (P2) an dem zuvor geschliffenen Zahn (204) aus der Zahnteilung berechnet werden kann.

9. Verfahren nach einem der Ansprüche 1 bis 8,
wobei die Schleifscheibe (100) einen voreingestellten Radialwinkel (RW) aufweist.

10. Verfahren nach einem der Ansprüche 1 bis 9,
wobei das Verfahren den weiteren Schritt umfasst:
Ermitteln der einzunehmenden Position wenigstens einer Achsen einer Werkzeugmaschine (1000) auf Grundlage des ermittelten Schleifscheibenmittelpunkts (PM).

11. Verfahren nach Anspruch 10,
wobei das Verfahren den weiteren Schritt umfasst:
Ermitteln der Positionsänderung der wenigstens einen Achse der Werkzeugmaschine (1000) zur Radialwinkeleinstellung der Schleifscheibe (100).

12. Verfahren nach Anspruch 10 oder 11,
wobei das Verfahren den weiteren Schritt umfasst:
Berechnen des einzustellenden Tangentialfreiwinkels (TW).

13. Verfahren nach Anspruch 12,
wobei sich der Tangentialfreiwinkel (TW) aus einem Tangentialfreiwinkel am Zahn (204) und einem Korrekturwert zusammensetzt.

14. Verfahren nach Anspruch 12 oder 13,
wobei das Verfahren den weiteren Schritt umfasst:
Ermitteln der Position wenigstens einer Achse der Werkzeugmaschine (1000) zur Einstellung des berechneten einzustellenden Tangentialfreiwinkels (TW).

15. Verfahren nach einem der Ansprüche 1 bis 14,
wobei das Verfahren den weiteren Schritt umfasst:
Berechnen der Position der wenigstens einen Achse der Werkzeugmaschine (1000) am Anfang des Schleifwegs an dem zu schleifenden Zahn (204).

16. Werkzeugmaschine (1000) zur Bearbeitung von Werkstücken, insbesondere Sägeblättern,
mit wenigstens einer nummerisch gesteuerten Achse (X1, X2, Z1, Z2, C1, Y1), und wenigstens einer Steuereinheit zum Ausführen des Verfahrens nach einem der Ansprüche 1 bis 15.

## Claims

1. Method for determining an ideal grinding wheel position relative to a saw blade (200), in particular a circular saw blade or a band saw blade, the method comprising:
determining the position of the grinding wheel center point (PM) relative to the saw blade (200) based on at least one geometric relationship between the grinding wheel (100) and at least one tooth (204) of the saw blade (200) to be ground,
wherein the geometric relationship between the grinding wheel (100) and the at least one tooth (204) to be ground of the saw blade (200) is defined at a position of the grinding wheel (100) corresponding to the position of the grinding wheel (100) at the end of a grinding path on the tooth (204) to be ground, the grinding path extending between an end edge (210) and a tooth tip (208) of the tooth (204) to be ground,
**characterized in that** the method comprises the further step of:
determining a geometric model of the grinding wheel (100) defining at least one peripheral edge (104, 106) of the grinding wheel (100), wherein the geometric relationship is determined by putting the at least one peripheral edge (104, 106) of the grinding wheel (100) at the first point (P1) and at the second point (P2) so that the grinding wheel center point (PM) is determinable in the coordinate system, wherein the second point (P2) is defined in a tooth tip (208, 212), and wherein the first point (P1) is defined at the end edge (210) of the tooth (204) to be ground opposite to the tooth tip (208, 212).

2. Method according to claim 1,
wherein the method comprises the further step of:
determining a predeterminable point (208) on the saw blade (200).

3. Method according to claim 2,
wherein the method comprises the further step of:
establishing a coordinate system at the predeterminable point (208) of the saw blade (200), wherein the predeterminable point (208) forms the origin of the coordinate system.

4. Method according to claim 3,
wherein the method comprises the further steps of:
determining a first point (P1) on the tooth (204) of the saw blade (200) to be ground in the coordinate system, and
determining a second point (P2) on the previously ground tooth (204) in the coordinate system.

5. Method according to any one of claims 1 to 4,
wherein the grinding wheel (100) is a face grinding wheel having at least first and second peripheral edges (104, 106).

6. Method according to claim 5,
wherein the geometric relationship is established by putting the first peripheral edge (104) to the first point (P1) and putting the second peripheral edge (104) to the second point (P2).

7. Method according to any one of claims 4 to 6,
wherein the first point (P1) on the tooth (204) to be ground of the saw blade (200) can be determined on the basis of the rake angle, the cutting edge length and/or the cutting edge thickness.

8. Method according to any one of claims 4 to 7,
where the second point (P2) on the previously ground tooth (204) can be calculated from the tooth pitch.

9. Method according to any one of claims 1 to 8,
wherein the grinding wheel (100) has a preset radial angle (RW).

10. Method according to any one of claims 1 to 9,
wherein the method comprises the further step of:
determining the position to be adopted of at least one axis of a machine tool (1000) based on the determined grinding wheel center point (PM).

11. Method according to claim 10,
wherein the method comprises the further step of:
determining the change in position of the at least one axis of the machine tool (1000) for radial angle adjustment of the grinding wheel (100).

12. Method according to claim 10 or 11,
wherein the method comprises the further step of:
calculate the tangential clearance angle (TW) to be set.

13. Method according to claim 12,
where the tangential clearance angle (TW) is composed of a tangential clearance angle at the tooth (204) and a correction value.

14. Method according to claim 12 or 13,
wherein the method comprises the further step of:
determining the position of at least one axis of the machine tool (1000) for setting the calculated tangential clearance angle (TW) to be set.

15. Method according to any one of claims 1 to 14,
wherein the method comprises the further step of:
calculating the position of the at least one axis of the machine tool (1000) at the beginning of the grinding path on the tooth (204) to be ground.

16. Machine tool (1000) for machining workpieces, especially saw blades,
with at least one numerically controlled axis (X1, X2, Z1, Z2, C1, Y1), and
at least one control unit for carrying out the method according to any one of claims 1 to 15.

## Revendications

1. Procédé de détermination d'une position de disque de meulage idéale par rapport à une lame de scie (200), en particulier une lame de scie circulaire ou une lame de scie à ruban le procédé consistant à:
déterminer la position d'un point médian de disque de meulage (PM) par rapport à la lame de scie (200) au moyen d'au moins une relation géométrique entre le disque de meulage (100) et au moins une dent à meuler (204) de la lame de scie (200), la relation géométrique étant définie entre le disque de meulage (100) et ladite dente à meuler (204) de la lame de scie (200) à une position du disque de meulage (100), qui correspond à la position du disque de meulage (100) au niveau de l'extrémité d'une distance de meulage sur la dent à meuler (204), la distance de meulage s'étendant entre un bord d'extrémité (210) et une pointe de dent (208) de la dente à meuler (204),
**caractérisé en ce que** le procédé comprend l'étape suivante consistant à:
déterminer une modèle géométrique du disque de meulage (100) qui définit au moins un bord périphérique (104, 106) du disque de meulage (100), la relation géométrique étant définie par la pose dudit bord périphérique (104, 106) du disque de meulage (100) dans le premier point (P1) et dans le second point (P2), de sorte que le point médian de disque de meulage (PM) puisse être déterminé dans le système de coordonnées, le second point (P2) étant déterminé dans une pointe de dent (208, 212), et le premier point (P1) étant déterminé sur le bord d'extrémité (210) de la dent à meuler (204), qui se trouve à l'opposé de la pointe de dent (208, 212).

2. Procédé selon la revendication 1, le procédé comprenant l'étape suivante consistant à:
déterminer un point (208) pouvant être défini à l'avance sur la lame de scie (200).

3. Procédé selon la revendication 2, le comprenant l'étape suivante consistant à:
définir un système de coordonnées sur le point (208) pouvant être défini à l'avant sur la lame de scie (200), le point (208) pouvant être défini à l'avance formant l'origine du système de coordonnées.

4. Procédé selon la revendication 3, le procédé comprenant l'étape suivante consistant à:
déterminer un premier point (P1) sur la dent à meuler (204) de la lame de scie (200) dans le système de coordonnées, et
déterminer un second point (P2) sur la dent meulée précédemment (204) dans le système de coordonnées.

5. Procédé selon l'une quelconque des revendications 1 à 4, le disque de meulage (100) étant un disque de meulage de face, qui présente au moins un premier et un second bord périphérique (104, 106).

6. Procédé selon la revendication 5, la relation géométrique étant définie par la pose du premier bord périphérique (104) sur le premier point (P1) et par la pose du second bord périphérique (104) sur le second point (P2).

7. Procédé selon l'une quelconque des revendications 4 à 6, le premier point (P1) pouvant être défini sur la dente à meuler (204) de la lame de scie (200) au moyen de l'angle d'affûtage, de la longueur de coupe et/ou de l'épaisseur de coupe.

8. Procédé selon l'une quelconque des revendications 4 à 7, le second point (P2) pouvant être calculé sur la dente meulée précédemment (204) à partir du pas de dent.

9. Procédé selon l'une quelconque des revendications 1 à 8, le disque de meulage (100) présentant un angle radial (RW) réglé à l'avance.

10. Procédé selon l'une quelconque des revendications 1 à 9, le procédé comprenant l'étape suivante consistant à:
déterminer la position que doit prendre au moins un axe d'une machine-outil (1000) sur la base du point médian de disque de meulage (PM).

11. Procédé selon la revendication 10, le procédé comprenant l'étape suivante consistant à:
déterminer la modification de position dudit axe de la machine-outil (1000) par rapport au réglage d'angle radial du disque de meulage (100).

12. Procédé selon la revendication 10 ou la revendication 11, le procédé comprenant l'étape suivante consistant à:
calculer l'angle de dépouille tangentiel à régler (TW).

13. Procédé selon la revendication 12, l'angle de dépouille tangentiel (TW) se composant d'un angle de dépouille tangentiel sur la dent (204) et d'une valeur de correction.

14. Procédé selon la revendication 12 ou la revendication 13, le procédé comprenant l'étape suivante consistant à:
déterminer la position d'au moins un axe de la machine-outil (1000) pour le régler de l'ange de dépouille tangentiel calculé (TW) à régler.

15. Procédé selon l'une quelconque des revendication 1 à 14, le procédé comprenant l'étape suivante consistant à:
calculer la position dudit axe de la machine-outil (1000) au début de la distance de meulage sur la dent à meuler (204).

16. Machine-outil (1000) d'usinage de pièces, en particulier des lames de scie, comprenant au moins un axe à commande numérique (X1, X2, Z1, Z2, C1, Y1), et au moins une unité de commande pour exécuter le procédé selon l'une des revendications 1 à 15.
